# EUROPEAN PATENT SPECIFICATION

(11) **EP 1 616 107 B1**
(45) Date of publication and mention of the grant of the patent: **07.02.2007**
(21) Application number: 04760092.9
(22) Date of filing: 22.04.2004
(51) Int. Cl.: F16C 33/20

(54) **COMPOSITE BEARINGS**
VERBUNDLAGER
PALIERS COMPOSITES

(30) Priority: 23.04.2003 US 464842 P
(43) Date of publication of application: 18.01.2006
(73) Proprietor: Glacier Garlock Bearings, Inc., Thorofare NJ 08086 (US)
(72) Inventor: KIM, Michael, R., Marlton, NJ 08053 (US); PENG, Yuan, Marlton, NJ 08053 (US); HORCHUCK, Michael, Williamstown, NJ 08094 (US)
(74) Representative: Hammler, Martin Franz
(86) International application number: PCT/US2004/012331
(87) International publication number: WO 2004/094850

(56) References cited:
- EP-A- 1 024 252
- US-A- 3 533 668
- US-A- 3 560 065
- US-A- 3 765 978
- US-A- 5 631 085

## Description

### FIELD OF THE INVENTION

This invention relates to composite bearings and methods of manufacture thereof.

### BACKGROUND OF THE INVENTION

Composite bearings can be used to provide low wear rates in a variety of high load applications. Composite bearings are currently available which feature a combination of a fibrous surface liner comprising a controlled filament wound pattern of both polytetrafluoroethylene (PTFE) and high strength fibers disposed within a thermosetting resin or other polymer. For example, it has been known to provide a thermosetting resin bearing with a lining containing PTFE strands and other polymeric fabrics, which together adhere to the resin and provide a low coefficient of friction for minimizing wear.

PTFE fibers disposed on a self-lubricating bearing surface can deteriorate as the temperature and fiber stresses increase during service. One attempt to overcome this deficiency has been to supplement the PTFE fibers with graphite fibers, graphite powders, and other materials to improve high temperature wear.

In certain applications, use of a self-lubricating bearing containing graphite is undesirable because graphite can be corrosive to materials used to fabricate shafts, such as carbon steel. For example, in hydropower applications, galvanic corrosion of a steel shaft should be avoided.

As a result, there is a need for self-lubricating bearings that may not include materials corrosive to carbon steel and that can perform similarly to graphite containing self-lubricating bearings in aspects such as, but not limited to, wear life and heat dissipation.

US3560065 and US3533668 concern reinforced plastic bearings in which a lamina of tetrafluoroethylene-cotton threads is disposed in resin filled with finely divided particles of polytetrafluoroethylene. The polytetrafluoroethylene particles are sufficiently small (typically 1 µm or less) to form a stable suspension in the uncured polymer. Together with the polytetrafluoroethylene threads, the polytetrafluoroethylene particles increase the lubricity of the lamina. Similar materials are disclosed in EP1024252 for use as vane stem seals and washers in turbine engines.

### SUMMARY OF THE INVENTION

The present invention provides composite bearings and methods for manufacturing composite bearings, as set out in claims 1 and 17 respectively. The composite bearings comprise polytetrafluoroethylene (PTFE) particles and a wetting agent in combination with fibers of PTFE and a second fibrous material in a polymeric matrix.

Accordingly, a composite bearing is provided that can be useful in applications where galvanic corrosion should be avoided. The composite bearings may perform similarly or better than graphite containing self-lubricating bearings in aspects such as, but not limited to, wear life and heat dissipation.

### BRIEF DESCRIPTION OF THE DRAWINGS

The accompanying drawings illustrate an embodiment of the invention.

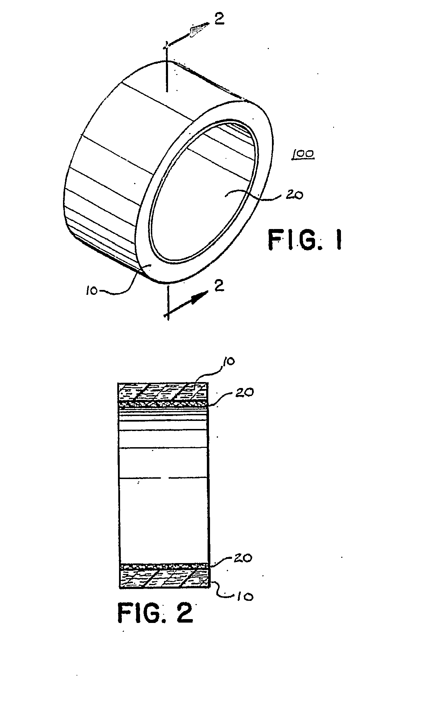

FIG. 1 is a perspective illustration of an embodiment of a composite bearing of the present invention;
FIG. 2 is an enlarged detail of a side, cross-sectional view of the bearing of FIG. 1 taken through line 2-2.

### DETAILED DESCRIPTION OF THE INVENTION

The composite bearings of this invention comprise: a supporting shell having a surface; and a lubricating lining disposed on said surface comprising fibers of polytetrafluoroethylene wound with a second fibrous material, said fibers being in a polymeric matrix comprising polytetrafluoroethylene particles and a wetting agent. The wetting agent is operable to reduce the surface energy of a resinous material and allow the resinous material to wet the PTFE particles such that the PTFE particles can be evenly dispersed throughout the resinous material used to prepare the polymer matrix. The wetted PTFE particles can reduce deterioration of fibers disposed within the polymer matrix of a bearing.

Referring now to the Figures, a composite bearing is illustrated. The composite bearing 100 comprises a support shell 10 having a surface thereon. Disposed on this surface is a lubricating lining 20 comprising fibers of polytetrafluoroethylene wound with a second fibrous material. In an embodiment, the lining may be self-lubricating. These fibers are disposed in a polymeric matrix comprising PTFE particles and a wetting agent.

The second fibrous material of this invention comprises any polymeric fiber material bondable to the polymeric matrix of the lining 20. A particular polymeric fiber material may be selected based on its cost, uniformity, or strength. In an embodiment, the second fibrous material may comprise a polymeric fiber that can be twisted together with the polytetrafluoroethylene fibers. Twisted polymeric fibers useful in the present invention may comprise resin-bondable yarn and may comprise polyester, nylon, aramid, or cellulosic material. In an embodiment, a resin-bondable yam may comprise DACRON® polyester. In another embodiment, a resin-bondable yarn may comprise NOMEX® nylon.

The support shell 10 may comprise any material useful to prepare the rigid support shell 10. For example, the support shell 10 may comprise a suitable metal backing or housing and the lining 20 can be affixed to the support shell 10 through means of an adhesive. In embodiments useful for hydropower applications, the support shell 10 and polymeric matrix of the lining 20 of this invention may comprise a resinous material such as, but not limited to, any of the well-known thermosetting resins suitable for use in a bearing. Useful thermosetting resins may include those that have high strength and low shrinkage during curing. An example of a resinous material useful in the present invention is epoxy resin. In an embodiment, an epoxy resin may comprise a polyether resin formed originally by the polymerization of bisphenol A and epichlorohydrin. Further examples of potentially suitable materials for use to construct the support shell 10 and polymeric matrix of the lining 20 are glass/epoxy, glass/polyester, glass/phenolic, linen/phenolic and cotton/phenolic.

Two potentially useful categories of epoxy formulations, which are based upon their hardener reactive ingredients, include those reacted with various anhydrides or amines. In an embodiment, an epoxy resin of this invention may include about 1500 parts by weight EPON® 826 or 828 (Shell Chemical Co.), 1350 parts by weight hardener such as, but not limited to, methyl anhydride (Anhydrides & Chemical Co.) or NADIC® methyl anhydride (Buffalo Color Corp.), and 30 parts by weight of a curing accelerator such as, but not limited to, "BDMA" benzyl dimethyl amine accelerator DY062 (Ciba-Geigy Corp.).

Any PTFE particles may be used so long as the particles are have a total surface area sufficiently high to be wetted and can be evenly dispersed in the resinous material. In an embodiment, the particle size of 95% of the PTFE particles is less than 13 µm (500 micro inches) (ASTMD4895). In another embodiment, the particle size of 95% of the PTFE particles is greater than 5 µm (200 micro inches) (ASTM D4895). Examples of commercially available PTFE particles potentially useful in the invention include, but are not limited to, Teflon® 62 and 600A (Dupont); CD1 and CD014 (ICI); Hostaflon® TF-2053 and TF- 2071 (Dyneon). The upper limit of the amount of PTFE may be determined by various factors such as, but not limited to, cost, the resulting viscosity of the resinous material, the compressive strength of the final composite material, and the ease with which the coated fibers are able to be wound. In an embodiment, the amount of PTFE particles in the polymer matrix is less than 15% by weight. In another embodiment, amount of PTFE particles in the polymer matrix is greater than 1 % by weight. In another embodiment, the amount of PTFE particles in the polymer matrix is between 8 and 12% by weight.

In an embodiment, the PTFE particles can be mixed into one of the epoxy recipe ingredients to remove clusters. Ball mills, roller mills, and high shear mixers are well known equipment in the solids dispersion industry to accomplish this task.

Any wetting agent operable to reduce the surface energy of the resinous material used to prepare the polymer matrix may be used to wet the PTFE particles. Wetted PTFE particles may be more readily suspended and evenly distributed in the resinous material than PTFE particles that have not been wetted. Also, wetted PTFE particles may agglomerate at a lower rate than PTFE particles that have not been wetted. Even distribution of the wetted PTFE within the resinous material may improve quality control and the performance characteristics of the composite bearing. The particular wetting agent useful in the invention may depend upon the resinous material used to prepare the polymer matrix and its surface energy. Examples of potentially useful wetting agents include non-ionic wetting agents such as non-ionic siloxane copolymers such as TroySol^{™} S366 and S367 (Troy Chemical Corp.) and Silwet® L7600 (polydimethylsiloxane methylethoxylate, GE Silicones). Other useful non-ionic wetting agents may include Triton® X-100 and X-305 (Octylphenoxypolyethoxy ethanol, Dow Chemical). In an embodiment wherein the resinous material comprises an epoxy thermosetting resin, the wetting agent may comprise a non-ionic siloxane copolymer.

In an embodiment, the PTFE particles can be wetted by mixing at room temperature (25°C or less) for 10 minutes a mixture comprising NADIC® methyl anhydride, PTFE particles, and TroySol^{™} S366 wetting agent. The mixture can be mixed with an industrial "Jiffy" or "Lightning Propeller Mixer". The mixture is re-mixed after 24 hours for another 10 minutes at room temperature. The resulting dispersion can be used to wind a helical weave of PTFE and resin-bondable yam of the liner wind.

In one embodiment of the method of the present invention, two-plies of polyester (DACRON®) or nylon(NOMEX®) and one-ply of PTFE fiber can be twisted together and helically wound over a chrome plated steel mandrel. In a further embodiment, the fibers are wound to an average wall thickness of about 0.025 cm to 2.54 cm (0.01 to 1.0 inches). In another embodiment, the fibers are wound to an average wall thickness of about 0.063 cm to 0.089 cm (0.025 to 0.035 inches). In another embodiment, prior to winding, the helically wound cord can be dipped into an epoxy resin comprising PTFE particles and a wetting agent, to saturate the fibers. In another embodiment, the bearings of this invention can be manufactured using such methods as pulling a knitted tube of fibers or wrapping a woven cloth of fibers over a mandrel prior to, or subsequent to, impregnation with an epoxy resin comprising PTFE powder and a wetting agent.

Certain of the benefits of this invention are exemplified by the following examples. Each example was tested on a Low Amplitude Oscillation (HOT) bearing test machine developed by Glacier Garlock Bearings, Inc. to test self-lubricating bearing wear life at conditions of median load, typically greater than 27.6 MPa (4,000 psi), and median speed, typically from about 1.52 cm/s (3 feet/minute). The ± 5° oscillating mode of shaft direction can simulate many of the commercial applications for the bearing products this machine tests, such as the pivot mechanism of a wicket gates on hydropower generators. The bearing load is applied to the fixed bearing, encased in a housing, through a weight loaded mechanical cantilever system. The shaft, supported on both sides beyond the test bearing, oscillates by a variable speed motor drive though the test bearing that is maintained at a constant load. Wear depth is measured by the bearing wall thickness changes at the middle point of contact area.

### EXAMPLES

### Example (Comparative)

A PTFE-Dacron® filament wound composite bearing (1620-11 MLG bearing by GGB, Thorofare, N. J.) without PTFE particles or wetting agent was tested on a HOT testing machine with the following test conditions: pressure=29.6MPa (4,300 psi), oscillation=10° total +/-5° from center, speed=200 cycles per minute and a steel shaft finish = 0.18 µm (7 micro-inches) AA and surface hardness of about 100 to 120 Rockwell "B". This test represented the "control" and was conducted over approximately a 90 hours period, resulting in a wear depth of 0.043 cm (0.017 inches) at 1.1 million cycles.

### Example 2

A bearing having the lining composition and construction of Example 1, but including PTFE particles and wetting agent in the epoxy liner was subject to the same HOT test conditions, resulting in a wear depth of 0.018 cm (0.007 inches) at the end of test.

The PTFE particles were wetted in the following manner. A mixture comprising NADIC® methyl anhydride (8kg), Teflon® #62 PTFE fine powder (2kg), and TroySol^{™} S366 (0.2kg) was mixed with an industrial "Jiffy" or "Lightning Propeller Mixer" for 10 minutes. The mixture was re-mixed after 24 hours for another 10 minutes. The resulting dispersion was mixed with Epon 828 epoxy (9 kg) and BDMA (0.2 kg) for 15 more minutes. A PTFE-Dacron® filament wound composite bearing having the lining composition and construction of Example 1, but including PTFE particles and wetting agent in the epoxy liner was manufactured to 1620-11 test bearings.

The bearings prepared according to Examples 1 and 2 were tested for their Low Amplitude Wear (29.6 MPa (4.3 ksi) and 1.1 million cycles). The bearing from Example 1 (Comparative) had a Wear Factor of 1.8 * 10⁻¹⁴ (m/cycle)/(kPa*m/s) (2.5 * 10⁻¹³ (in/cycle)/(psi*fpm)). The bearing from Example 2 containing PTFE particles had a Wear Factor of 7.3 * 10⁻¹⁵ (m/cycle)/(kPa*m/s) (1.0 * 10⁻¹³ (in/cycle)/(psi*fpm)).

## Claims

1. A composite bearing comprising:
a supporting shell (10) having a surface; and
a lubricating lining (20) disposed on said surface comprising fibers of polytetrafluoroethylene wound with a second fibrous material, said fibers being in a polymeric matrix comprising polyetrafluorethylene particles,
**characterised in that** the polymeric matrix comprises a wetting agent.

2. The composite beating of claim 1, wherein 95% of the polytetrafluorethylene particles have a particle size of less than 13 µm (500 micro inches).

3. The composite bearing of claim 1 or 2, wherein 95% of the polytetrafluorethylene particles have a particle size of greater than 5 µm (200 micro inches).

4. The composite bearing of claim 1, 2 or 3 wherein the polymer matrix comprises less than 15% by weight of polytetrafluoroethylene particles.

5. The composite bearing of any preceding claim, wherein the polymer matrix comprises greater than 1% by weight of polytetrafluoroethylene particles.

6. The composite bearing of any preceding claim, wherein the wetting agent comprises a non-ionic siloxane copolymer.

7. The composite bearing of any preceding claim, wherein said second fibrous material comprises a polymeric fiber twisted together with said polytetrafluoroethylene fibers.

8. The composite bearing of claim 7, wherein said polymeric fiber comprises a resin-bondable yam.

9. The composite bearing of claim 7, wherein said polymeric fiber comprises polyester, nylon, aramid or cellulosic fibers.

10. The composite bearing of claim 7, wherein said polymeric fiber and polytetrafluoroethylene fibers are disposed within a resinous material.

11. The composite bearing claim 10, wherein said resinous material comprises a thermosetting polymer.

12. The composite bearing of any preceding claim, wherein said shell is polymeric and comprises a resinous material.

13. The composite bearing of any preceding claim, wherein said polymeric shell comprises a thermosetting polymer.

14. The composite bearing of claim 13, wherein said polymeric shell is reinforced.

15. The composite bearing of claim 13, wherein said polymeric shell further comprises fiberglass.

16. The self-lubricating composite bearing of any preceding claim, wherein the wound fibers of the lining are helically wound.

17. A method for manufacturing a composite bearing comprising:
disposing a plurality of fibers comprising polytetrafluoroethylene and second fiberous material onto a mandrel, said fibers being disposed in a thermosetting resin comprising polytetrafluoroethylene particles; and
curing said thermosetting resin to form a rigid composite,
**characterised in that** the thermosetting resin further comprises a wetting agent.

18. The method of claim 17, further comprising the step of removing said rigid composite from said mandrel.

19. The method of claim 17 or 18, wherein said disposing step comprises providing said plurality of fibers in the form of a helical winding.

20. The method of any of claims 17 - 19, wherein the thermosetting resin comprises an epoxy resin.

21. The method of any of claims 17 - 20 wherein said disposing step further comprises drawing said helical winding through a bath of epoxy resin comprising polytetrafluoroethylene particles and a wetting agent.

22. The method of any of claims 17 - 21, wherein 95% of the polytetrafluorethylene particles have a particle size of less than 13 µm (500 micro inches).

23. The method of any of claims 17 - 22, wherein 95% of the polytetrafluorethylene particles have a particle size of greater than 5 µm (200 micro inches).

24. The method of any of claims 17 - 23, wherein the polymer matrix comprises less than 15% by weight of polytetrafluoroethylene particles.

25. The method of any of claims 17 - 24, wherein the polymer matrix comprises greater than 1 % by weight of polytetrafluoroethylene particles.

## Patentansprüche

1. Verbundlager umfassend:
eine Tragschale (10) mit einer Oberfläche und einem Schmierüberzug (20), der auf dieser Oberfläche angeordnet ist, der Fasern aus Polytetrafluorethylen umfasst, die mit einem zweiten Faserstoff umwunden sind, diese Fasern sind in einer polymeren Matrix enthalten, die Polytetrafluorethylenpartikel umfasst, **dadurch gekennzeichnet, dass**
die polymere Matrix ein Benetzungsmittel enthält.

2. Verbundlager nach Anspruch 1, wobei 95 % der Polytetrafluorethylenpartikel eine Partikelgröße von weniger als 13 µm (500 Mikroinch) aufweisen.

3. Verbundlager nach Anspruch 1 oder 2, wobei 95 % der Polytetrafluorethylenpartikel eine Partikelgröße von mehr als 5 µm (200 Mikroinch) aufweisen.

4. Verbundlager nach einem der Ansprüche 1, 2 oder 3, wobei die Polymermatrix weniger als 15 Gewichts-% Polytetrafluorethylenpartikel umfasst.

5. Verbundlager nach einem der vorherigen Ansprüche, wobei die Polymermatrix mehr als 1 Gewichts-% Polytetrafluorethylenpartikel umfasst.

6. Verbundlager nach einem der vorherigen Ansprüche, wobei das Benetzungsmittel ein nicht-ionisches Siloxancopolymer umfasst.

7. Verbundlager nach einem der vorherigen Ansprüche, wobei der zweite Faserstoff eine polymere Faser ist, die zusammen mit den Polytetrafluorethylenfasern verdrillt ist.

8. Verbundlager nach Anspruch 7, wobei die polymere Faser ein harzbindungsfähiger Faden ist.

9. Verbundlager nach Anspruch 7, wobei die polymere Faser Polyester, Nylon, Aramid oder Cellulosefasern umfasst.

10. Verbundlager nach Anspruch 7, wobei die polymere Faser und die Polytetrafluorethylenfasern innerhalb eines harzhaltigen Materials angeordnet sind.

11. Verbundlager nach Anspruch 10, wobei das harzhaltige Material ein hitzehärtbares Polymer ist.

12. Verbundlager nach einem der vorherigen Ansprüche, wobei die Schale ein Polymer ist und ein harzhaltiges Material umfasst.

13. Verbundlager nach einem der vorherigen Ansprüche, wobei die Polymerschale ein hitzehärtbares Polymer ist.

14. Verbundlager nach Anspruch 13, wobei die Polymerschale verstärkt ist.

15. Verbundlager nach Anspruch 13, wobei die Polymerschale außerdem Glasfaserstoff umfasst.

16. Selbstschmierendes Verbundlager nach einem der vorherigen Ansprüche, wobei die gewundenen Fasern des Überzugs helikal gewickelt sind.

17. Verfahren zur Herstellung eines Verbundlagers umfassend:
Verteilen einer Vielzahl von Fasern umfassend Polytetrafluorethylen und einen zweiten Faserstoff auf einem Dorn, die Fasern sind in einem hitzehärtbaren Harz enthalten, das Polytetrafluorethylenpartikel umfasst; und
Aushärten des hitzehärtbaren Harzes, um einen starren Verbund zu bilden,
**dadurch gekennzeichnet, dass**
das hitzehärtbare Harz außerdem ein Benetzungsmittel umfasst.

18. Verfahren nach Anspruch 17, dass außerdem den Schritt des Entfernens des starren Verbundes von dem Dorn umfasst.

19. Verfahren nach Anspruch 17 oder 18, wobei der Verteilungsschritt die Bereitstellung der Vielzahl von Fasern in Form einer helikalen Wicklung umfasst.

20. Verfahren nach einem der Ansprüche 17 bis 19, wobei das hitzehärtbare Harz ein Epoxyharz umfasst.

21. Verfahren nach einem der Ansprüche 17 bis 20, wobei der Verteilungsschritt außerdem das Ziehen der helikalen Wicklung durch ein Epoxyharzbad, das Polytetrafluorethylenpartikel und Benetzungsmittel enthält, umfasst.

22. Verfahren nach einem der Ansprüche 17 bis 21, wobei 95 % der Polytetrafluorethylenpartikel eine Partikelgröße von weniger als 13 µm (500 Mikroinch) aufweisen.

23. Verfahren nach einem der Ansprüche 17 bis 22, wobei 95 % der Polytetrafluorethylenpartikel eine Partikelgröße von mehr als 5 µm (200 Mikroinch) aufweisen.

24. Verfahren nach einem der Ansprüche 17 bis 23, wobei die Polymermatrix weniger als 15 Gewichts-% Polytetrafluorethylenpartikel umfasst.

25. Verfahren nach einem der Ansprüche 17 bis 24, wobei die Polymermatrix mehr als 1 Gewichts-% Polytetrafluorethylenpartikel umfasst.

## Revendications

1. Palier composite comprenant :
une enveloppe de support (10) ayant une surface ; et
un garnissage lubrifiant (20) disposé sur ladite surface comprenant des fibres de polytétrafluoroéthylène enroulées d'une seconde matière fibreuse, lesdites fibres étant dans une matrice polymérique comprenant des particules de polytétrafluoroéthylène,
**caractérisé en ce que** la matrice polymérique comprend un agent mouillant.

2. Palier composite de la revendication 1, où 95% des particules de polytétrafluoroéthylène ont une dimension des particules de moins de 13 µm (500 micro pouces).

3. Palier composite de la revendication 1 ou 2, où 95% des particules de polytétrafluoroéthylène ont une dimension des particules de plus de 5 µm (200 micro pouces).

4. Palier composite de la revendication 1, 2 ou 3, où la matrice du polymère comprend moins de 15% en poids de particules de polytétrafluoroéthylène.

5. Palier composite de toute revendication précédente, où la matrice du polymère comprend plus de 1% en poids de particules de polytétrafluoroéthylène.

6. Palier composite de toute revendication précédente, où l'agent mouillant comprend un copolymère de siloxane non ionique.

7. Palier composite de toute revendication précédente, où ladite seconde matière fibreuse comprend une fibre polymérique tordue en même temps que lesdites fibres de polytétrafluoroéthylène.

8. Palier composite de la revendication 7, où ladite fibre polymérique comprend un fil collable à la résine.

9. Palier composite de la revendication 7, où ladite fibre polymérique comprend des fibres de polyester, nylon, aramide ou cellulosiques.

10. Palier composite de la revendication 7, où ladite fibre polymérique et les fibres de polytétrafluoroéthylène sont disposées dans une matière résineuse.

11. Palier composite de la revendication 10, où ladite matière résineuse comprend un polymère thermodurcissable.

12. Palier composite de toute revendication précédente, où ladite enveloppe est polymérique et comprend une matière résineuse.

13. Palier composite de toute revendication précédente, où ladite enveloppe polymérique comprend un polymère thermodurcissable.

14. Palier composite de la revendication 13, où ladite enveloppe polymérique est renforcée.

15. Palier composite de la revendication 13, où ladite enveloppe polymérique comprend de plus de la fibre de verre.

16. Palier composite auto-lubrifiant de toute revendication précédente, où les fibres enroulées du garnissage sont enroulées en hélice.

17. Méthode de fabrication d'un palier composite comprenant :
la disposition d'un certain nombre de fibres comprenant du polytétrafluoroéthylène et d'une seconde matière fibreuse sur un mandrin, lesdites fibres étant disposées dans une résine thermodurcissable comprenant des particules de polytétrafluoroéthylène ; et
le durcissement de ladite résine thermodurcissable pour former un composite rigide,
**caractérisée en ce que** la résine thermodurcissable comprend de plus un agent mouillant.

18. Méthode de la revendication 17, comprenant de plus l'étape d'enlever ledit composite rigide dudit mandrin.

19. Méthode de la revendication 17 ou 18, où ladite étape de disposer consiste à prévoir ladite pluralité de fibres sous la forme d'un enroulement en hélice.

20. Méthode de l'une quelconque des revendications 17-19, où la résine thermodurcissable comprend une résine époxy.

21. Méthode de l'une quelconque des revendications 17-20, où ladite étape de disposer comprend de plus l'étirage dudit déroulement en hélice à travers un bain de résine époxy comprenant des particules de polytétrafluoroéthylène et un agent mouillant.

22. Méthode de l'une quelconque des revendications 17-21, où 95% des particules de polytétrafluroéthylène ont une dimension de particules de moins de 13 µm (500 micro pouces).

23. Méthode de l'une quelconque des revendications 17-22, où 95% des particules de polytétrafluoroéthylène ont une dimension de particules de plus de 5 µm (200 micro pouces).

24. Méthode de l'une quelconque des revendications 17-23, où la matrice de polymère comprend moins de 15% en poids de particules de polytétrafluoroéthylène.

25. Méthode de l'une quelconque des revendications 17-24, où la matrice du polymère comprend plus de 1% en poids de particules de polytétrafluoroéthylène.
